# EUROPEAN PATENT APPLICATION

(11) **EP 3 952 184 A1**
(43) Date of publication of application: **09.02.2022**
(21) Application number: 20781797.4
(22) Date of filing: 31.03.2020
(51) Int. Cl.: H04L 5/00

(54) **CHANNEL RESOURCE DETERMINATION METHOD, CHANNEL DETECTION METHOD AND TERMINAL**

(30) Priority: 02.04.2019 CN 201910263036
(71) Applicant: VIVO MOBILE COMMUNICATION CO., LTD., Dongguan, Guangdong 523860 (CN)
(72) Inventor: PENG, Shuyan, Dongguan, Guangdong 523860 (CN); JI, Zichao, Dongguan, Guangdong 523860 (CN); WU, Huaming, Dongguan, Guangdong 523860 (CN)
(74) Representative: Lavoix
(86) International application number: PCT/CN2020/082460
(87) International publication number: WO 2020/200204

(57) **Abstract**

This disclosure provides a method for determining a channel resource, a channel detection method, and a terminal. The method includes: obtaining a candidate resource of a physical sidelink control channel PSCCH, where the candidate resource is in a subchannel of the PSCCH, or the candidate resource is in a subchannel of a PSSCH resource selected by the terminal, or the candidate resource is in a frequency domain range of a PSSCH resource selected by the terminal, or the candidate resource is in a resource set; and determining a transmission resource of the to-be-transmitted PSCCH based on the candidate resource.

## Description

### CROSS-REFERENCE TO RELATED APPLICATIONS

This application claims priority to Chinese Patent Application No. 201910263036.1, filed in China on April 2, 2019, which is incorporated herein by reference in its entirety.

### TECHNICAL FIELD

This disclosure relates to the field of communications technologies, and in particular, to a method for determining a channel resource, a channel detection method, and a terminal.

### BACKGROUND

A sidelink is a link for performing direct communication between terminals without using a network.

A new radio (New Radio, NR) sidelink includes the following channels:
a physical sidelink control channel (Physical Sidelink Control Channel, PSCCH);
a physical sidelink shared channel (Physical Sidelink Shared Channel, PSSCH);
a physical sidelink broadcast channel (Physical Sidelink Broadcast Channel, PSBCH); and
a physical sidelink feedback channel (Physical Sidelink Feedback Channel, PSFCH).

NR PSCCH and PSSCH mapping supports time division multiplexing (Time Division Multiplexing, TDM). An NR PSSCH already supports a subchannel (subchannel) structure. However, whether a PSCCH supports a subchannel and how a PSCCH subchannel is configured are still unclear. In NR, a 2-stage PSCCH may be considered. In a 2-stage PSCCH, there is no specific design solution for whether there is an association between a first-part PSCCH and a second-part PSCCH. An NR system is used as an example in this application. Another system may also have the foregoing problem, which still needs to be resolved.

### SUMMARY

Embodiments of this disclosure provide a method for determining a channel resource, a channel detection method, and a terminal, to resolve a problem that there is no specific design solution for PSCCH resource configuration and resource mapping manners in a related technology.

To resolve the foregoing technical problem, this disclosure is implemented as follows: A method for determining a channel resource is provided, applied to a terminal and including:
obtaining a candidate resource of a physical sidelink control channel PSCCH, where the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set; and
determining a transmission resource of the to-be-transmitted PSCCH based on the candidate resource, where
one subchannel has contiguous frequency domain resources.

Some embodiments of this disclosure further provide a channel detection method, applied to a terminal and including:
performing, by the terminal, blind detection on a first-part PSCCH, and determining, based on a blind detection result, whether to perform detection on a second-part PSCCH;
   or
performing, by the terminal, blind detection on a first-part PSCCH and a second-part PSCCH.

Some embodiments of this disclosure further provide a terminal, including:
an obtaining module, configured to obtain a candidate resource of a physical sidelink control channel PSCCH, where the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set; and
a resource determining module, configured to determine a transmission resource of the to-be-transmitted PSCCH based on the candidate resource, where
one subchannel has contiguous frequency domain resources.

Some embodiments of this disclosure further provide a terminal, including:
a detection module, configured to perform blind detection on a first-part PSCCH, and determine, based on a blind detection result, whether to perform detection on a second-part PSCCH; or configured to perform blind detection on a first-part PSCCH and a second-part PSCCH.

Some embodiments of this disclosure further provide a terminal, including a processor, a memory, and a program stored in the memory and capable of running on the processor. When the program is executed by the processor, steps of the foregoing method for determining a channel resource are implemented, or when the program is executed by the processor, steps of the foregoing channel detection method are implemented.

Some embodiments of this disclosure further provide a computer-readable storage medium. The computer-readable storage medium stores a computer program. When the computer program is executed by a processor, steps of the foregoing method for determining a channel resource are implemented, or when the computer program is executed by a processor, steps of the foregoing channel detection method are implemented.

In some embodiments of this disclosure, a PSCCH resource mapping manner is defined, so as to be applicable to independent PSCCH transmission and a case in which a configuration of a related PSSCH exists in a same scheduling unit, thereby balancing a relationship between system overheads and resource utilization.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and a person of ordinary skill in the art may derive other drawings from these accompanying drawings without creative efforts.
FIG. 1 is a flowchart of steps of a method for determining a channel resource according to some embodiments of this disclosure;
FIG. 2 is a first schematic diagram of Example 1 in a method for determining a channel resource according to some embodiments of this disclosure;
FIG. 3 is a second schematic diagram of Example 1 in the method for determining a channel resource according to some embodiments of this disclosure;
FIG. 4 is a third schematic diagram of Example 1 in the method for determining a channel resource according to some embodiments of this disclosure;
FIG. 5 is a fourth schematic diagram of Example 1 in the method for determining a channel resource according to some embodiments of this disclosure;
FIG. 6 is a first schematic diagram of Example 1 in the method for determining a channel resource according to some embodiments of this disclosure;
FIG. 7 is a second schematic diagram of Example 3 in the method for determining a channel resource according to some embodiments of this disclosure;
FIG. 8 is a third schematic diagram of Example 3 in the method for determining a channel resource according to some embodiments of this disclosure;
FIG. 9 is a schematic diagram of steps of a channel detection method according to some embodiments of this disclosure;
FIG. 10 is a first schematic diagram of Example 4 according to some embodiments of this disclosure;
FIG. 11 is a second schematic diagram of Example 4 according to some embodiments of this disclosure;
FIG. 12 is a first schematic diagram of Example 5 according to some embodiments of this disclosure;
FIG. 13 is a second schematic diagram of Example 5 according to some embodiments of this disclosure;
FIG. 14 is a first schematic diagram of Example 6 according to some embodiments of this disclosure;
FIG. 15 is a second schematic diagram of Example 6 according to some embodiments of this disclosure;
FIG. 16 is a first schematic diagram of Example 7 according to some embodiments of this disclosure;
FIG. 17 is a second schematic diagram of Example 7 according to some embodiments of this disclosure;
FIG. 18 is a first schematic diagram of Example 8 according to some embodiments of this disclosure;
FIG. 19 is a second schematic diagram of Example 8 according to some embodiments of this disclosure;
FIG. 20 is a third schematic diagram of Example 8 according to some embodiments of this disclosure;
FIG. 21 is a fourth schematic diagram of Example 8 according to some embodiments of this disclosure;
FIG. 22 is a schematic diagram of Example 9 according to some embodiments of this disclosure;
FIG. 23 is a schematic diagram of Example 11 according to some embodiments of this disclosure;
FIG. 24 is a first schematic structural diagram of a terminal according to some embodiments of this disclosure;
FIG. 25 is a second schematic structural diagram of a terminal according to some embodiments of this disclosure; and
FIG. 26 is a third schematic structural diagram of a terminal according to some embodiments of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the protection scope of this disclosure.

In the embodiments of this disclosure, terms such as "an example" and "for example" are used to represent giving an example, an instance, or an illustration. Any embodiment or design solution described as "an example" or "for example" in the embodiments of this disclosure shall not be construed as being more preferred or advantageous than other embodiments or design solutions. Specifically, the terms such as "an example" and "for example" are intended to present related concepts in a specific manner.

A network-side device provided in the embodiments of this disclosure may be a base station, and the base station may be a commonly used base station, may be an evolved NodeB (evolved NodeB, eNB), or may be a device such as a network-side device in a 5G system (for example, a next generation NodeB (next generation node base station, gNB) or a transmission and reception point (transmission and reception point, TRP)), or a cell.

A terminal provided in the embodiments of this disclosure may be a mobile phone, a tablet computer, a notebook computer, an ultra-mobile personal computer (Ultra-Mobile Personal Computer, UMPC), a netbook, a wearable device (Wearable Device), a vehicle-mounted device, a personal digital assistant (Personal Digital Assistant, PDA), or the like. It should be noted that a specific type of the terminal is not limited in the embodiments of this disclosure. The embodiments of this disclosure are described by using LTE and NR systems as an example, but are not limited to these systems. The technical solutions provided in this disclosure may be applied to other systems that have a same problem.

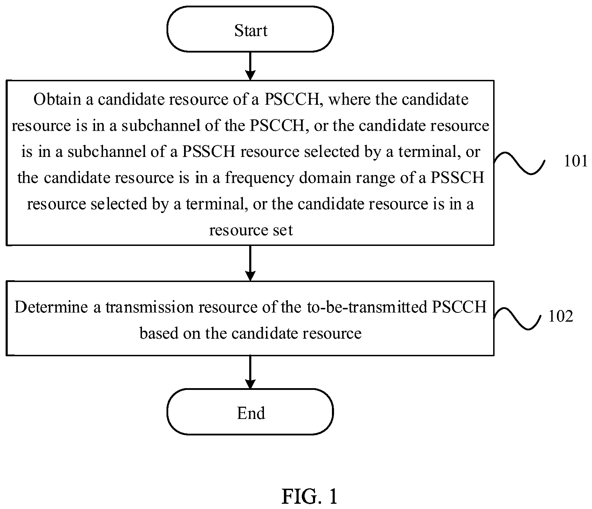

As shown in FIG. 1, an embodiment of this disclosure provides a method for determining a channel resource. The method is applied to a terminal and includes the following steps.

Step 101: Obtain a candidate resource of a physical sidelink control channel PSCCH, where the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set.

One subchannel has contiguous frequency domain resources. A length of contiguous frequency domain resources of one subchannel may be preconfigured or pre-agreed. This is not specifically limited herein. The resource set includes a preset time-frequency resource. The preset time-frequency resource includes a candidate resource of a PSCCH of N terminals, where N is an integer greater than or equal to 1.

In an optional embodiment, a subchannel may be a subchannel of a PSCCH, or may be a subchannel of a PSSCH. The candidate resource is in at least one subchannel. For example, a PSSCH includes four subchannels, where each of the first three subchannels includes a candidate resource of the PSCCH, or all of the four subchannels include candidate resources of the PSCCH.

In another optional embodiment, that the candidate resource is in a frequency domain range of a PSSCH resource selected by the terminal specifically means that a frequency domain range of the candidate resource cannot exceed the frequency domain range of the PSSCH. For example, the frequency domain range of the PSSCH includes PRBs whose identifiers are 0 to 49, where 10 PRBs constitute one subchannel, in other words, the PSSCH includes five subchannels. In this case, the frequency domain range of the candidate resource of the PSCCH may include PRBs 0 to 20, or may include PRBs 0 to 30, or the like. However, the frequency domain range of the candidate resource of the PSCCH cannot include any PRB whose identifier is greater than or equal to 50.

In still another optional embodiment, the resource set is a predefined physical time-frequency resource (a frequency domain range of the time-frequency resource may exceed the frequency domain range of the PSSCH, or may be in the frequency domain range of the PSSCH, which is not specifically limited herein). The terminal determines the candidate resource of the PSCCH from the resource set. The candidate resource may be some of resources in the resource set, or may be the entire resource set. This is not specifically limited herein. The resource set may include a candidate resource of one terminal, or may include candidate resources of a plurality of terminals (in other words, the plurality of terminals share one resource set).

Step 102: Determine a transmission resource of the to-be-transmitted PSCCH based on the candidate resource.

It should be noted that the terminal mentioned in this embodiment of this disclosure includes a sending terminal and receiving terminal on a sidelink. The sending terminal determines the transmission resource of the to-be-transmitted PSCCH based on a result of measurement by the sending terminal, or selects the transmission resource of the to-be-transmitted PSCCH based on assistance information reported by another terminal/device. The receiving terminal determines the transmission resource based on a result of measurement by the receiving terminal, and feeds back the transmission resource to the sending terminal.

In an optional embodiment, in some embodiments of this disclosure, the PSCCH may be transmitted in one step (that is, the PSCCH is directly transmitted), or may be transmitted in two steps (that is, a first-part PSCCH and a second-part PSCCH are transmitted).

In a case that the PSCCH is transmitted in one step, step 102 includes:
selecting the transmission resource of the to-be-transmitted PSCCH from the candidate resource.

In a case that the PSCCH includes the first-part PSCCH and the second-part PSCCH, there are at least the following three manners for determining a transmission resource of the first-part PSCCH and a transmission resource of the second-part PSCCH:

Manner 1: Step 102 includes:
selecting the transmission resource of the to-be-transmitted first-part PSCCH and the transmission resource of the to-be-transmitted second-part PSCCH from the candidate resource of the PSCCH.

Optionally, the selecting the transmission resource of the to-be-transmitted first-part PSCCH and the transmission resource of the to-be-transmitted second-part PSCCH from the candidate resource includes:
selecting the transmission resource of the to-be-transmitted first-part PSCCH from the candidate resource; and
after the transmission resource of the to-be-transmitted first-part PSCCH, mapping the second-part PSCCH, to obtain the transmission resource of the second-part PSCCH.

In this manner, the transmission resource of the first-part PSCCH and the transmission resource of the second-part PSCCH are in the same candidate resource, and may be in a same subchannel, or may be in different subchannels.

Manner 2: Step 102 includes:
selecting the transmission resource of the to-be-transmitted first-part PSCCH from the candidate resource of the PSCCH; and
the method further includes: selecting the transmission resource of the to-be-transmitted second-part PSCCH on the PSSCH resource selected by the terminal.

Optionally, the selecting the transmission resource of the to-be-transmitted second-part PSCCH on the PSSCH resource selected by the terminal for data transmission includes:
mapping the second-part PSCCH from a first physical resource block PRB of the PSSCH, to obtain the transmission resource of the second-part PSCCH;
   or
mapping the second-part PSCCH from a first PRB of a first subchannel of the PSSCH, to obtain the transmission resource of the second-part PSCCH;
   or
mapping the second-part PSCCH from a PRB with a first offset value relative to a first PRB of a first subchannel of the PSSCH, to obtain the transmission resource of the second-part PSCCH, where a granularity of the first offset value is a PRB, for example, offset by one PRB or by two PRBs;
   or
mapping the second-part PSCCH from a first PRB of a subchannel with a second offset value relative to a first subchannel of the PSSCH, to obtain the transmission resource of the second-part PSCCH, where a granularity of the second offset value is a subchannel, for example, offset by one subchannel or by two subchannels.

The first PRB is a highest PRB or lowest PRB, and the first subchannel is a lowest subchannel or highest subchannel of the PSSCH.

Manner 3: In a case that the candidate resource of the PSCCH includes a candidate resource of the first-part PSCCH and a candidate resource of the second-part PSCCH, step 102 includes:
selecting the transmission resource of the to-be-transmitted first-part PSCCH from the candidate resource of the first-part PSCCH; and
selecting the transmission resource of the to-be-transmitted second-part PSCCH from the candidate resource of the second-part PSCCH.

It should be noted that the candidate resource of the PSCCH, the candidate resource of the first-part PSCCH, and the candidate resource of the second-part PSCCH may be predefined by a protocol, preconfigured by a network, configured by a network, or configured by the terminal, and when being preconfigured or configured by the network, these candidate resources may be configured by using same signaling, or may be configured separately by using different signaling. This is not specifically limited herein.

In an optional embodiment, the selecting the transmission resource from the candidate resource includes:
selecting the transmission resource from the candidate resource based on channel parameters of the to-be-transmitted channel.

The channel parameters of the to-be-transmitted channel include:
time domain resource information of the to-be-transmitted channel and frequency domain resource information of the to-be-transmitted channel.

The candidate resource is the candidate resource of the PSCCH, the transmission resource is the transmission resource of the PSCCH, and the to-be-transmitted channel is the PSCCH;
or
the candidate resource is the candidate resource of the PSCCH, the transmission resource is the transmission resource of the first-part PSCCH, and the to-be-transmitted channel is the first-part PSCCH;
   or
the candidate resource is the candidate resource of the first-part PSCCH, the transmission resource is the transmission resource of the first-part PSCCH, and the to-be-transmitted channel is the first-part PSCCH;
   or
the candidate resource is the candidate resource of the second-part PSCCH, the transmission resource is the transmission resource of the second-part PSCCH, and the to-be-transmitted channel is the second-part PSCCH.

In other words, the selecting the transmission resource from the candidate resource includes:
selecting the transmission resource of the PSCCH from the candidate resource of the PSCCH based on channel parameters of the PSCCH; or
selecting the transmission resource of the first-part PSCCH from the candidate resource of the PSCCH based on channel parameters of the first-part PSCCH; or
selecting the transmission resource of the first-part PSCCH from the candidate resource of the first-part PSCCH based on channel parameters of the first-part PSCCH; or
selecting the transmission resource of the second-part PSCCH from the candidate resource of the second-part PSCCH based on channel parameters of the second-part PSCCH.

It should be noted that the channel parameters of the to-be-transmitted channel are predefined by a protocol, preconfigured by a network, configured by a network, or configured by the terminal.

Further, the time domain resource information of the to-be-transmitted channel includes at least one of the following:
a quantity of time domain symbols, where a unit of the quantity of time domain symbols may be a slot, a subframe, a symbol, or a frame;
a time domain symbol start location;
a time domain symbol end location; and
a time domain resource pattern, where for example, the terminal may perform multiplexing in one slot or one short slot, for example, interference is reduced by performing mapping based on a terminal ID.

Further, the frequency domain resource information of the to-be-transmitted channel includes at least one of the following:
a quantity of frequency domain resources;
a frequency domain resource start location;
a frequency domain resource end location;
an offset value of the frequency domain resource start location relative to a first resource unit;
an offset value of the frequency domain resource end location relative to the first resource unit; and
a frequency domain resource pattern, where for example, a plurality of frequency domain allocation methods may match PSCCHs of different aggregation levels ALs, or for another example, the pattern is every other resource block RB in frequency domain, that is, an even-numbered RB or an odd-numbered RB matches a PSCCH of one aggregation level.

The first resource unit is a lowest resource unit or highest resource unit of a resource pool selected by the terminal, or the first resource unit is a lowest resource unit or highest resource unit of the PSSCH resource selected by the terminal.

It should be noted that a granularity of the first resource unit may be a resource block RB, a subchannel, a resource element RE, a resource block group RBG, or the like. This is not specifically limited herein.

Optionally, the channel parameters of the to-be-transmitted channel further include:
time division multiplexing and/or frequency division multiplexing, where time division multiplexing and/or frequency division multiplexing are/is a resource multiplexing manner for selecting the transmission resource of the to-be-transmitted channel, that is, a plurality of terminals in one resource pool may select the transmission resource of the to-be-transmitted channel in the time division multiplexing and/or frequency division multiplexing manner.

To more clearly describe a method for selecting the transmission resource from the candidate resource, the following provides detailed descriptions with reference to several examples.

### Example 1 (performing time domain resource mapping based on the time domain resource information, to determine a time domain part of the transmission resource)

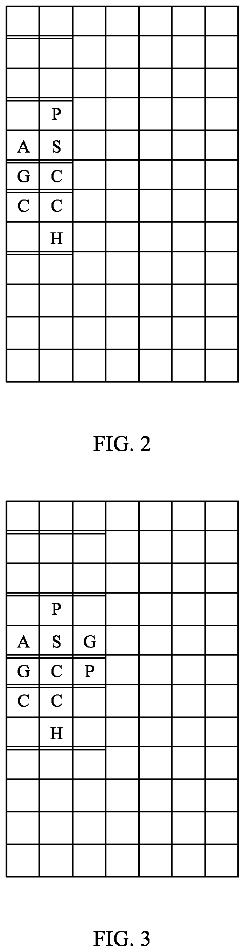

As shown in FIG. 2, an automatic gain control (Automatic Gain Control, AGC) symbol is mapped on the first symbol, and control information is mapped after the AGC symbol/on the second symbol (the control information is carried by the PSCCH). In a case that control information of a PSSCH of a same terminal is transmitted in a same slot or short slot, there is no guard period GP.

As shown in FIG. 3, an AGC symbol is mapped on the first symbol, control information is mapped after the AGC symbol/on the second symbol (the control information is carried by the PSCCH), and a GP symbol is mapped on the (N+1)^{th} symbol, where N is an integer greater than or equal to 2. Corresponding to an independent PSCCH or in subsequent mapping of corresponding feedback information, there is a GP.

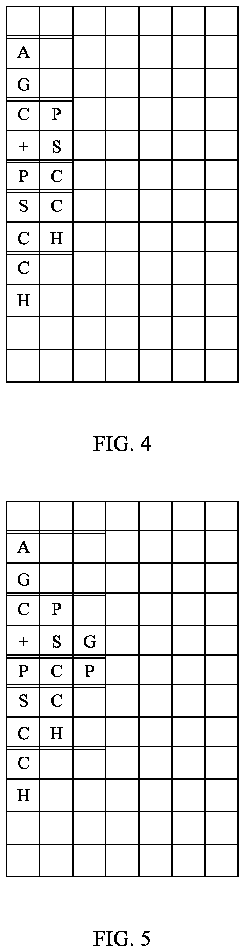

As shown in FIG. 4, control information is not used for rate matching of AGC (the control information is used for AGC), and the control information is mapped from the first symbol. As shown in FIG. 5, a GP symbol is mapped on the N^{th} symbol, where N is an integer greater than or equal to 2.

### Example 2 (performing frequency domain resource mapping based on the frequency domain resource information, to determine a frequency domain part of the transmission resource)

Mapping is performed in the candidate resource of the PSCCH or on the subchannel. For example, the frequency domain part of the transmission resource is a lowest or highest candidate resource of the PSCCH in the frequency domain range corresponding to the PSSCH resource selected by the terminal, or a lowest or highest candidate resource of the first-part PSCCH in the frequency domain range corresponding to the PSSCH resource selected by the terminal.

It should be noted that there is only one piece of control information (namely, PSCCH) on a same frequency domain resource in one slot or one short slot.

### Example 3 (time division multiplexing and/or frequency division multiplexing)

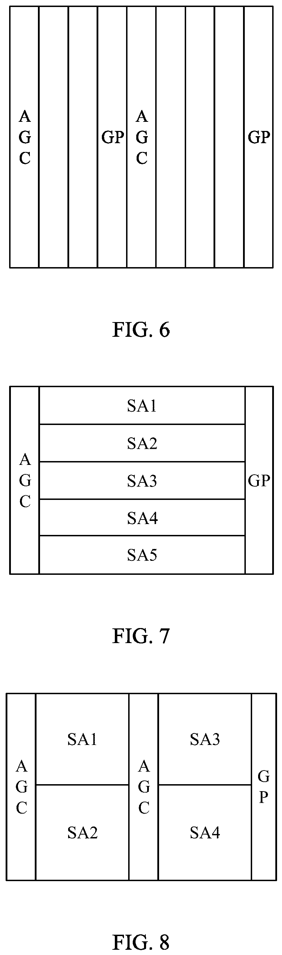

As shown in FIG. 6, in time division multiplexing TDM, an AGC symbol is mapped on the first symbol, control information is mapped after the AGC symbol/on the second symbol, a GP is mapped on the (N+2)^{th} symbol (N is equal to 2 in FIG. 6), an AGC symbol is mapped on the (N+3)^{th} symbol, control information is mapped after the AGC symbol or on the (N+4)^{th} symbol, and a GP is mapped on the (2N+5)^{th} symbol. In the TDM manner, there may be a plurality of pieces of control information on a same frequency domain resource in one slot or short slot.

As shown in FIG. 7, in frequency division multiplexing FDM, an AGC symbol is mapped on the first symbol, a GP is mapped on the last symbol, and a plurality of pieces of control information (corresponding to SA1-SA5 in FIG. 7) are separately mapped in different frequency bands of a symbol between the first symbol and the last symbol.

As shown in FIG. 8, in time division multiplexing + frequency division multiplexing, an AGC symbol is mapped on the first symbol, an AGC symbol is mapped on the M^{th} symbol, and a frequency domain range of a plurality of symbols between the first symbol and the M^{th} symbol is divided into two frequency bands, respectively used for mapping SA1 and SA2, where M is an integer greater than 3. In the TDM+FDM manner, there may be a plurality of pieces of control information on a same frequency domain resource in one slot or short slot.

In an optional embodiment, the method further includes:
adding resource information of the second-part PSCCH to the first-part PSCCH, where the resource information of the second-part PSCCH includes at least one of the following:
a time domain resource start location of the second-part PSCCH;
a time domain resource end location of the second-part PSCCH;
a quantity of symbols occupied by a time domain resource of the second-part PSCCH;
a frequency domain resource start location of the second-part PSCCH;
a frequency domain resource end location of the second-part PSCCH;
a quantity of PRBs occupied by a frequency domain resource of the second-part PSCCH;
a quantity of subchannels occupied by the frequency domain resource of the second-part PSCCH;
a time domain offset value of the second-part PSCCH; and
a frequency domain offset value of the second-part PSCCH.

The receiving terminal may perform detection on the PSCCH based on the resource information of the second-part PSCCH carried in the first-part PSCCH, with no need to perform blind detection on the second-part PSCCH. This reduces detection complexity and improves detection efficiency.

Further, for 2-stage PSCCH transmission, in the foregoing embodiment of this disclosure, the method further includes:
configuring a reference signal of the first-part PSCCH; and
configuring a reference signal of the second-part PSCCH.

Optionally, the configuring a reference signal of the first-part PSCCH includes:
obtaining configuration information that is predefined by a protocol, preconfigured by a network, configured by a network, or configured by the terminal for the reference signal of the first-part PSCCH; and
configuring the reference signal of the first-part PSCCH based on the configuration information of the reference signal of the first-part PSCCH.

Optionally, the configuring a reference signal of the second-part PSCCH includes:
configuring the reference signal of the second-part PSCCH by using configuration information that is the same as the configuration information used for the reference signal of the first-part PSCCH, in which case, only one piece of configuration information may be configured, and the reference signal of the first-part PSCCH and the reference signal of the second-part PSCCH are both configured by using the configuration information;
   or
configuring the reference signal of the second-part PSCCH separately, in which configuration manner, configuration information of the reference signal of the second-part PSCCH may be carried in the first-part PSCCH, so that the receiving terminal can correctly obtain a configuration of the reference signal of the second-part PSCCH;
   or
configuring the reference signal of the second-part PSCCH by using configuration information of a reference signal of the PSSCH.

In other words, when the receiving terminal demodulates the second-part PSCCH, the configuration of the reference signal of the second-part PSCCH is known. The configuration of the reference signal of the second-part PSCCH may be indicated in the first-part PSCCH, or may be a default configuration.

In an optional embodiment, step 101 includes:
obtaining first configuration information that is predefined by a protocol, preconfigured by a network, configured by a network, or configured by the terminal, where the first configuration information includes at least one of the following:
a size of the resource set;
a start location of the resource set; and
an end location of the resource set.

Optionally, the first configuration information further includes at least one of the following:
an aggregation level of the PSCCH;
a size of the candidate resource of the PSCCH;
a quantity of candidate resources of the PSCCH;
a location of the candidate resource of the PSCCH;
a size of a candidate resource of a first-part PSCCH;
a quantity of candidate resources of the first-part PSCCH;
a location of the candidate resource of the first-part PSCCH;
a size of a candidate resource of a second-part PSCCH;
a quantity of candidate resources of the second-part PSCCH; and
a location of the candidate resource of the second-part PSCCH.

In another optional embodiment, step 101 includes:
obtaining the candidate resource that is of the PSCCH on at least one subchannel of the PSSCH and that is predefined by a protocol, preconfigured by a network, configured by a network, or configured by the terminal;
   or
obtaining an offset value of the candidate resource of the PSCCH relative to a subchannel (a highest or lowest subchannel of the PSSCH) of the PSSCH resource selected by the terminal for data transmission, where the candidate resource is predefined by a protocol, preconfigured by a network, configured by a network, or configured by the terminal;
   or
obtaining the candidate resource that is of the PSCCH on at least one subchannel of the PSCCH and that is predefined by a protocol, preconfigured by a network, configured by a network, or configured by the terminal, where the PSCCH and the PSSCH may use a same subchannel configuration, or may use different subchannel configurations.

In still another optional embodiment, step 101 includes:
obtaining second configuration information that is predefined by a protocol, preconfigured by a network, configured by a network, or configured by the terminal, where the second configuration information includes at least one of the following:
a size of the candidate resource of the PSCCH in the PSSCH subchannel;
a start location of the candidate resource of the PSCCH in the PSSCH subchannel;
an end location of the candidate resource of the PSCCH in the PSSCH subchannel;
a quantity of candidate resources of the PSCCH in the PSSCH subchannel;
a pattern of the candidate resource of the PSCCH in the PSSCH subchannel;
a size of the candidate resource of the PSCCH in the PSSCH resource;
a start location of the candidate resource of the PSCCH in the PSSCH resource;
an end location of the candidate resource of the PSCCH in the PSSCH resource;
a quantity of candidate resources of the PSCCH in the PSSCH resource; and
a pattern of the candidate resource of the PSCCH in the PSSCH resource.

It should be noted that a specific manner of the network configuration mentioned in all of the foregoing embodiments is as follows: The network performs configuration by using a system information block SIB, radio resource control RRC signaling, downlink control information DCI signaling, or a master information block MIB. This is not specifically limited herein.

It should be noted that some embodiments of this disclosure provide the following four manners of configuring the candidate resource of the PSCCH. To be specific, step 101 includes:
obtaining first configuration signaling of a bandwidth part BWP, where the configuration signaling is applicable to a resource pool included in the BWP, the first configuration signaling carries a configuration parameter configured based on the BWP, the candidate resource of the PSCCH is configured in units of resource pools, and each resource pool uses a same configuration parameter.

Alternatively, step 101 includes: obtaining second configuration signaling of a resource pool, where the configuration signaling is applicable to the resource pool, the second configuration signaling carries a configuration parameter configured based on the resource pool, and each subchannel in the resource pool uses a same configuration parameter.

Alternatively, step 101 includes: obtaining third configuration signaling of the subchannel of the PSCCH, where the third configuration signaling is applicable to the subchannel of the PSCCH.

Alternatively, step 101 includes: obtaining fourth configuration signaling corresponding to a target aggregation level, where the fourth configuration signaling is applicable to the PSCCH corresponding to the target aggregation level.

The first configuration signaling, the second configuration signaling, the third configuration signaling, or the fourth configuration signaling is used to configure the candidate resource of the PSCCH.

To sum up, in the foregoing embodiments of this disclosure, a PSCCH resource mapping manner is defined, so as to be applicable to independent PSCCH transmission and a case in which a configuration of a related PSSCH exists in a same scheduling unit, thereby balancing a relationship between system overheads and resource utilization.

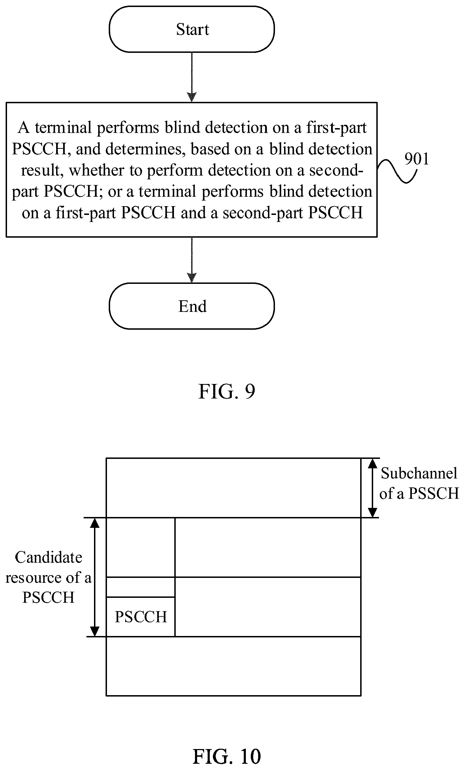

As shown in FIG. 9, some embodiments of this disclosure further provide a channel detection method, applied to a terminal and including:

Step 901: The terminal performs blind detection on a first-part PSCCH, and determines, based on a blind detection result, whether to perform detection on a second-part PSCCH; or the terminal performs blind detection on a first-part PSCCH and a second-part PSCCH.

Optionally, the performing, by the terminal, blind detection on a first-part PSCCH, and determining, based on a blind detection result, whether to perform detection on a second-part PSCCH includes:
performing, by the terminal, blind detection on the first-part PSCCH; and
if demodulation of the first-part PSCCH succeeds and information about the second-part PSCCH is obtained, performing detection on the second-part PSCCH based on the information about the second-part PSCCH; or
if demodulation of the first-part PSCCH fails, stopping detection of the second-part PSCCH, where in a case that there is an association between the first-part PSCCH and the second-part PSCCH, for example, the first-part PSCCH includes resource allocation, but the second-part PSCCH does not include resource allocation information of the PSSCH, the second-part PSCCH does not need to be demodulated.

Further, the performing, by the terminal, blind detection on a first-part PSCCH and a second-part PSCCH includes: The terminal performs blind detection on a configured first-part PSCCH resource by using a fixed size, and the terminal performs blind detection on a configured second-part PSCCH resource based on some predetermined sets of a controlled size. This is applied to a resource reservation scenario, so that even if first-part resource reservation information is lost, detection of the second-part PSCCH related to PSSCH scheduling may still succeed. A detection success probability can be increased to a specific extent, but complexity of blind detection by the receiving terminal is increased. Both a size of the second-part PSCCH and a resource mapping location may be configured more flexibly.

To sum up, some embodiments of this disclosure further define the detection method of 2-stage PSCCH transmission, thereby balancing a relationship between system overheads and resource utilization.

To more clearly describe the method for determining a channel resource and the channel detection method that are provided in some embodiments of this disclosure, the following provides descriptions with reference to several examples.

### Example 4

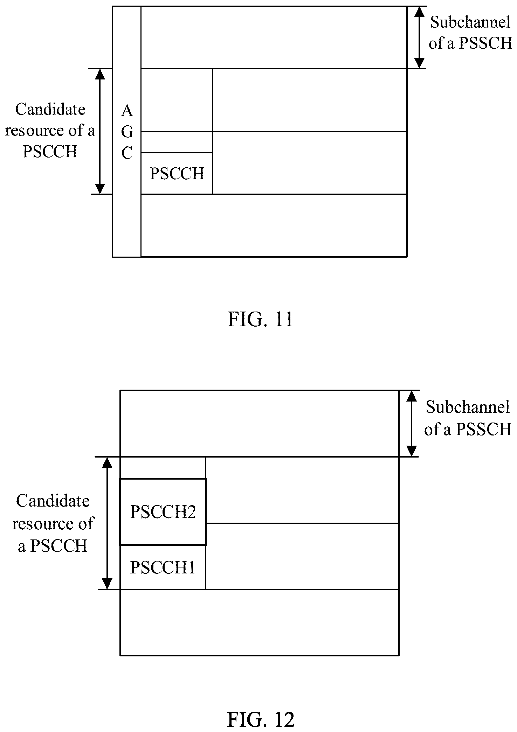

As shown in FIG. 10 and FIG. 11, the candidate resource of the PSCCH is configured in a resource pool (resource pool). A terminal in the resource pool may send the PSCCH on the candidate resource.

The sending terminal maps the PSCCH from a lowest PRB of the candidate resource of the PSCCH.

The receiving terminal performs blind detection on the PSCCH from the lowest PRB of the candidate resource of the PSCCH.

### Example 5

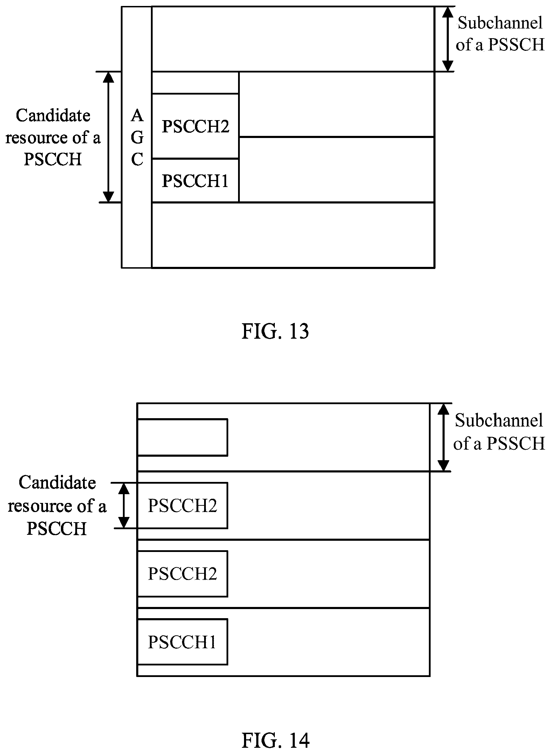

As shown in FIG. 12 and FIG. 13, the candidate resource of the PSCCH is configured in a resource pool (resource pool). A terminal in the resource pool may send the PSCCH on the candidate resource.

The first-part PSCCH (namely, a PSCCH1) is mapped from a lowest PRB of the candidate resource of the PSCCH.

The second-part PSCCH (namely, a PSCCH2) is mapped after the transmission resource of the first-part PSCCH.

The receiving terminal performs blind detection on the PSCCH1 on the defined lowest PRB of the candidate resource.

The receiving terminal determines a size of the PSCCH2 based on demodulation information of the PSCCH1, and performs blind detection on information about the PSCCH2 after a resource of the PSCCH1 (the size of the PSCCH2 is indicated in the PSCCH1).

Alternatively, the receiving terminal performs blind detection on information about the PSCCH2 after a resource of the PSCCH1 (a size of the PSCCH2 is a preset value, or blind detection is performed by using several values).

### Example 6

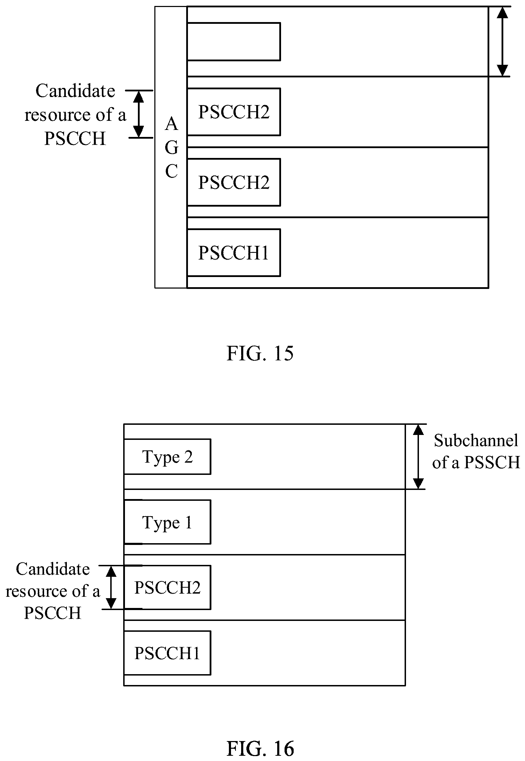

As shown in FIG. 14 and FIG. 15, the candidate resource of the PSCCH is configured in a subchannel of a PSSCH in a resource pool (resource pool).

The first-part PSCCH (namely, a PSCCH1) is mapped from a candidate resource that is of the PSCCH and that is in a lowest subchannel of the corresponding PSSCH.

The second-part PSCCH (namely, a PSCCH2) is mapped after the transmission resource of the first-part PSCCH.

### Example 7

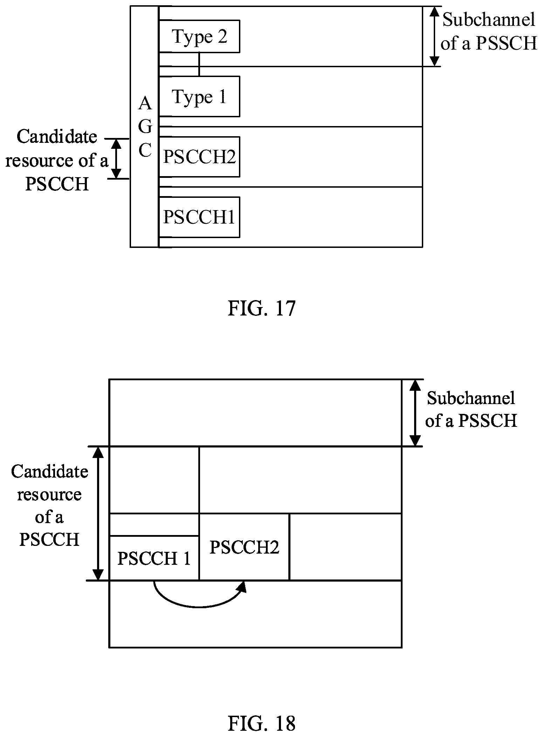

As shown in FIG. 16 and FIG. 17, the candidate resource of the PSCCH is configured in a subchannel of a PSSCH in a resource pool (resource pool), and is configured as a PSCCH type 1 (type 1) resource or a PSCCH type 2 (type 2) resource.

The first-part PSCCH (namely, a PSCCH1) is sequentially mapped from a PSCCH type 1 resource in a lowest subchannel of the corresponding PSSCH.

The second-part PSCCH (namely, a PSCCH2) is sequentially mapped from a PSCCH type 2 resource in the lowest subchannel of the corresponding PSSCH.

### Example 8

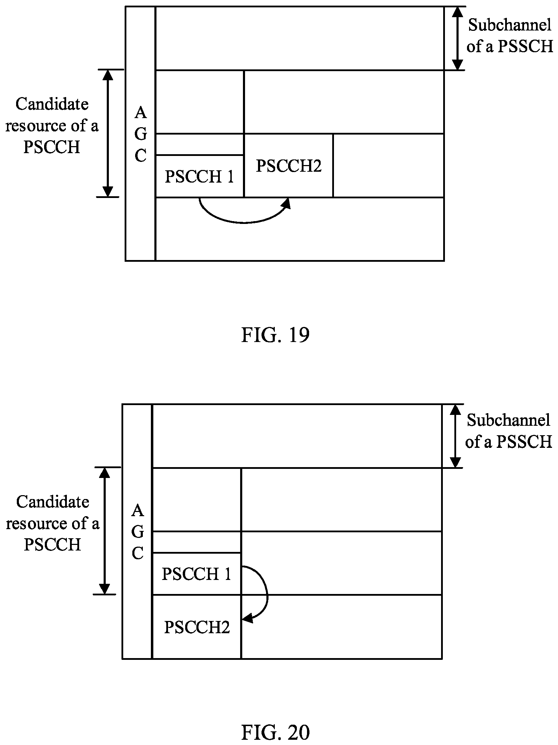

As shown in FIG. 18, FIG. 19, FIG. 20, and FIG. 21, the candidate resource of the PSCCH is configured in a resource pool (resource pool).

The first-part PSCCH (namely, a PSCCH1) is mapped from a lowest PRB of the candidate resource of the PSCCH. The first-part PSCCH indicates a time-frequency resource location for mapping the second-part PSCCH (namely, a PSCCH2), and a DMRS configuration.

The receiving terminal receives information about the second-part PSCCH on a time-frequency resource indicated in the first-part PSCCH (namely, the PSCCH1).

### Example 9

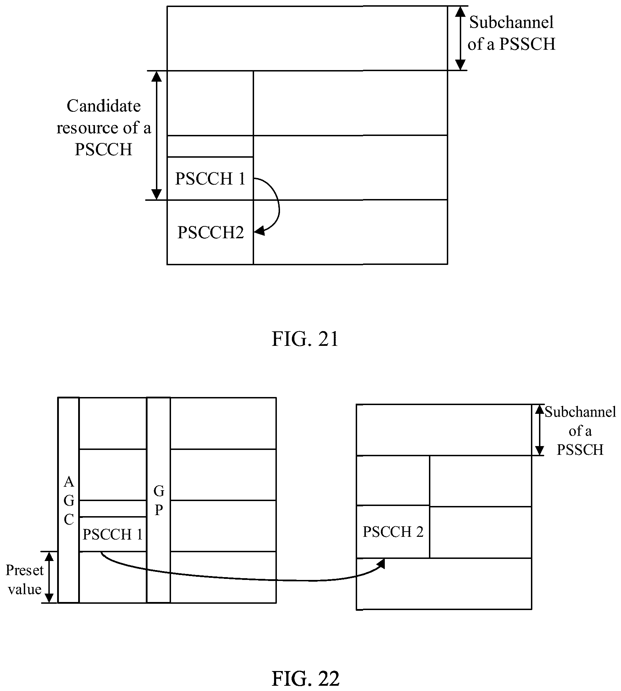

As shown in FIG. 22, the first-part PSCCH (namely, a PSCCH1) is mapped from a location with a preset offset value (offset) relative to a PSSCH subchannel boundary, and it is assumed that the first-part PSCCH is a resource reservation indication.

The first-part PSCCH carries information such as a resource indication and a size of the second-part PSCCH (namely, a PSCCH2).

The receiving terminal performs blind detection on the first-part PSCCH, and if demodulation succeeds, receives the second-part PSCCH based on related information in the demodulated first-part PSCCH, or if demodulation fails, performs blind detection on the second-part PSCCH.

### Example 10

The first-part PSCCH (namely, a PSCCH1) is mapped from a location with a preset offset value (offset) relative to a PSSCH subchannel boundary, and it is assumed that the first-part PSCCH is a resource reservation indication.

The first-part PSCCH carries information such as a resource indication and a size of the second-part PSCCH (namely, a PSCCH2).

The receiving terminal performs blind detection on the first-part PSCCH, and if demodulation fails, does not perform detection on the second-part PSCCH.

In this example, a resource conflict probability is increased to a specific extent.

### Example 11

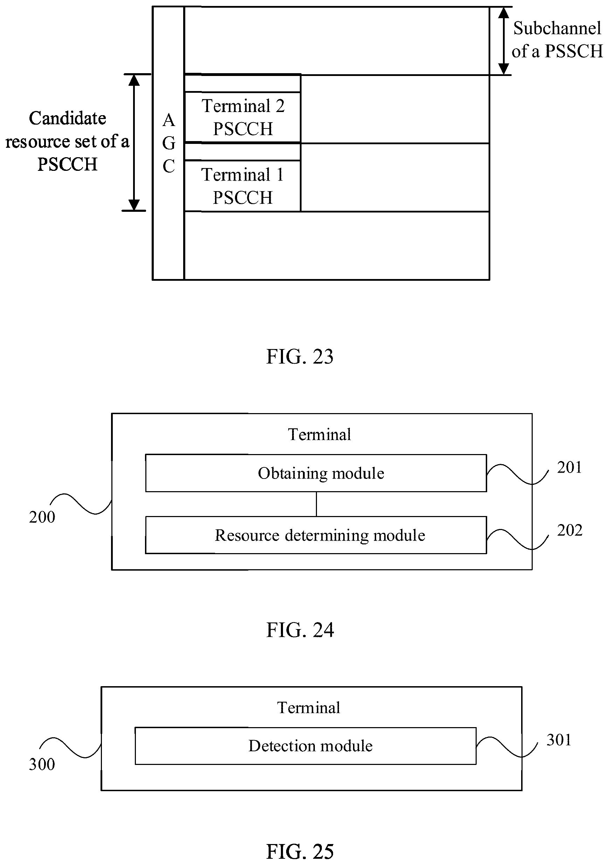

As shown in FIG. 23, the resource set to which the candidate resource of the PSCCH belongs is configured in a resource pool (resource pool). A terminal (for example, a terminal 1 and a terminal 2) in the resource pool may select a transmission resource from the resource set and send the PSCCH.

The sending terminal maps the PSCCH from a lowest PRB of any subchannel of the candidate resource of the PSCCH.

As shown in FIG. 24, some embodiments of this disclosure further provide a terminal 200, including:
an obtaining module 201, configured to obtain a candidate resource of a physical sidelink control channel PSCCH, where the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set; and
a resource determining module 202, configured to determine a transmission resource of the to-be-transmitted PSCCH based on the candidate resource.

One subchannel has contiguous frequency domain resources.

Optionally, in the foregoing embodiment of this disclosure, the resource determining module includes:
a first resource selection submodule, configured to select the transmission resource of the to-be-transmitted PSCCH from the candidate resource.

Optionally, in the foregoing embodiment of this disclosure, the resource determining module includes:
a second resource selection submodule, configured to: in a case that the PSCCH includes a first-part PSCCH and a second-part PSCCH, select a transmission resource of the to-be-transmitted first-part PSCCH and a transmission resource of the to-be-transmitted second-part PSCCH from the candidate resource of the PSCCH.

Optionally, in the foregoing embodiment of this disclosure, the second resource selection submodule includes:
a first unit, configured to select the transmission resource of the to-be-transmitted first-part PSCCH from the candidate resource; and
a second unit, configured to, after the transmission resource of the to-be-transmitted first-part PSCCH, sequentially map the second-part PSCCH, to obtain the transmission resource of the second-part PSCCH.

Optionally, in the foregoing embodiment of this disclosure, in a case that the PSCCH includes a first-part PSCCH and a second-part PSCCH, the resource determining module includes:
a first selection module, configured to select a transmission resource of the to-be-transmitted first-part PSCCH from the candidate resource of the PSCCH; and
the terminal further includes:
   a second selection module, configured to select a transmission resource of the to-be-transmitted second-part PSCCH on the PSSCH resource selected by the terminal for data transmission.

Optionally, in the foregoing embodiment of this disclosure, the second selection module includes:
a selection submodule, configured to map the second-part PSCCH from a first physical resource block PRB of a PSSCH, to obtain the transmission resource of the second-part PSCCH; or
configured to map the second-part PSCCH from a first PRB of a first subchannel of a PSSCH, to obtain the transmission resource of the second-part PSCCH; or
configured to map the second-part PSCCH from a PRB with a first offset value relative to a first PRB of a first subchannel of a PSSCH, to obtain the transmission resource of the second-part PSCCH; or
configured to map the second-part PSCCH from a first PRB of a subchannel with a second offset value relative to a first subchannel of a PSSCH, to obtain the transmission resource of the second-part PSCCH.

The first PRB is a highest PRB or lowest PRB, and the first subchannel is a lowest subchannel or highest subchannel of the PSSCH.

Optionally, in the foregoing embodiment of this disclosure, in a case that the PSCCH includes a first-part PSCCH and a second-part PSCCH, and the candidate resource of the PSCCH includes a candidate resource of the first-part PSCCH and a candidate resource of the second-part PSCCH, the resource determining module includes:
a third selection module, configured to select a transmission resource of the to-be-transmitted first-part PSCCH from the candidate resource of the first-part PSCCH; and
a fourth selection module, configured to select a transmission resource of the to-be-transmitted second-part PSCCH from the candidate resource of the second-part PSCCH.

Optionally, in the foregoing embodiment of this disclosure, the terminal further includes:
a selection module, configured to select the transmission resource from the candidate resource based on channel parameters of the to-be-transmitted channel.

The channel parameters include:
time domain resource information of the to-be-transmitted channel and frequency domain resource information of the to-be-transmitted channel.

The candidate resource is the candidate resource of the PSCCH, the transmission resource is the transmission resource of the PSCCH, and the to-be-transmitted channel is the PSCCH;
or
the candidate resource is the candidate resource of the PSCCH, the transmission resource is the transmission resource of the first-part PSCCH, and the to-be-transmitted channel is the first-part PSCCH;
   or
the candidate resource is the candidate resource of the first-part PSCCH, the transmission resource is the transmission resource of the first-part PSCCH, and the to-be-transmitted channel is the first-part PSCCH;
   or
the candidate resource is the candidate resource of the second-part PSCCH, the transmission resource is the transmission resource of the second-part PSCCH, and the to-be-transmitted channel is the second-part PSCCH.

Optionally, in the foregoing embodiment of this disclosure, the time domain resource information of the to-be-transmitted channel includes at least one of the following:
a quantity of time domain symbols;
a time domain symbol start location;
a time domain symbol end location; and
a time domain resource pattern.

Optionally, in the foregoing embodiment of this disclosure, the frequency domain resource information of the to-be-transmitted channel includes at least one of the following:
a quantity of frequency domain resources;
a frequency domain resource start location;
a frequency domain resource end location;
an offset value of the frequency domain resource start location relative to a first resource unit;
an offset value of the frequency domain resource end location relative to the first resource unit; and
a frequency domain resource pattern.

The first resource unit is a lowest resource unit or highest resource unit of a resource pool selected by the terminal, or the first resource unit is a lowest resource unit or highest resource unit of the PSSCH resource selected by the terminal.

Optionally, in the foregoing embodiment of this disclosure, the first-part PSCCH carries resource information of the second-part PSCCH, where the resource information of the second-part PSCCH includes at least one of the following:
a time domain resource start location of the second-part PSCCH;
a time domain resource end location of the second-part PSCCH;
a quantity of symbols occupied by a time domain resource of the second-part PSCCH;
a frequency domain resource start location of the second-part PSCCH;
a frequency domain resource end location of the second-part PSCCH;
a quantity of PRBs occupied by a frequency domain resource of the second-part PSCCH;
a quantity of subchannels occupied by the frequency domain resource of the second-part PSCCH;
a time domain offset value of the second-part PSCCH; and
a frequency domain offset value of the second-part PSCCH.

Optionally, in the foregoing embodiment of this disclosure, the terminal further includes:
a first configuration module, configured to configure a reference signal of the first-part PSCCH; and
a second configuration module, configured to configure a reference signal of the second-part PSCCH.

Optionally, in the foregoing embodiment of this disclosure, the first configuration module includes:
a first submodule, configured to obtain configuration information that is predefined by a protocol, preconfigured by a network, configured by a network, or configured by the terminal for the reference signal of the first-part PSCCH; and
a second submodule, configured to configure the reference signal of the first-part PSCCH based on the configuration information of the reference signal of the first-part PSCCH.

Optionally, in the foregoing embodiment of this disclosure, the second configuration module includes:
a third submodule, configured to configure the reference signal of the second-part PSCCH by using configuration information that is the same as the configuration information used for the reference signal of the first-part PSCCH; or
configured to configure the reference signal of the second-part PSCCH separately; or
configured to configure the reference signal of the second-part PSCCH by using configuration information of a reference signal of the PSSCH.

Optionally, in the foregoing embodiment of this disclosure, the obtaining module includes:
a first obtaining submodule, configured to obtain first configuration information that is predefined by a protocol, preconfigured by a network, configured by a network, or configured by the terminal, where the first configuration information includes at least one of the following:
a size of the resource set;
a start location of the resource set; and
an end location of the resource set.

Optionally, in the foregoing embodiment of this disclosure, the first configuration information further includes at least one of the following:
an aggregation level of the PSCCH;
a size of the candidate resource of the PSCCH;
a quantity of candidate resources of the PSCCH;
a location of the candidate resource of the PSCCH;
a size of a candidate resource of a first-part PSCCH;
a quantity of candidate resources of the first-part PSCCH;
a location of the candidate resource of the first-part PSCCH;
a size of a candidate resource of a second-part PSCCH;
a quantity of candidate resources of the second-part PSCCH; and
a location of the candidate resource of the second-part PSCCH.

Optionally, in the foregoing embodiment of this disclosure, the obtaining module includes:
a second obtaining submodule, configured to obtain the candidate resource that is of the PSCCH on at least one subchannel of a PSSCH and that is predefined by a protocol, preconfigured by a network, configured by a network, or configured by the terminal; or
configured to obtain an offset value of the candidate resource of the PSCCH relative to a subchannel of a PSSCH, where the candidate resource is predefined by a protocol, preconfigured by a network, configured by a network, or configured by the terminal; or
configured to obtain the candidate resource that is of the PSCCH on at least one subchannel of the PSCCH and that is predefined by a protocol, preconfigured by a network, configured by a network, or configured by the terminal.

Optionally, in the foregoing embodiment of this disclosure, the obtaining module includes:
a third obtaining submodule, configured to obtain second configuration information that is predefined by a protocol, preconfigured by a network, configured by a network, or configured by the terminal, where the second configuration information includes at least one of the following:
a size of the candidate resource of the PSCCH in the PSSCH subchannel;
a start location of the candidate resource of the PSCCH in the PSSCH subchannel;
an end location of the candidate resource of the PSCCH in the PSSCH subchannel;
a quantity of candidate resources of the PSCCH in the PSSCH subchannel;
a pattern of the candidate resource of the PSCCH in the PSSCH subchannel;
a size of the candidate resource of the PSCCH in the PSSCH resource;
a start location of the candidate resource of the PSCCH in the PSSCH resource;
an end location of the candidate resource of the PSCCH in the PSSCH resource;
a quantity of candidate resources of the PSCCH in the PSSCH resource; and
a pattern of the candidate resource of the PSCCH in the PSSCH resource.

Optionally, in the foregoing embodiment of this disclosure, the obtaining module includes:
a fourth obtaining submodule, configured to obtain first configuration signaling of a bandwidth part BWP, where the configuration signaling is applicable to a resource pool included in the BWP; or
configured to obtain second configuration signaling of a resource pool, where the configuration signaling is applicable to the resource pool; or
configured to obtain third configuration signaling of the subchannel of the PSCCH, where the third configuration signaling is applicable to the subchannel of the PSCCH; or
configured to obtain fourth configuration signaling corresponding to a target aggregation level, where the fourth configuration signaling is applicable to the PSCCH corresponding to the target aggregation level.

The first configuration signaling, the second configuration signaling, the third configuration signaling, or the fourth configuration signaling is used to configure the candidate resource of the PSCCH.

The terminal provided in some embodiments of this disclosure can implement each process implemented by the terminal in the method embodiments in FIG. 1 to FIG. 21. To avoid repetition, details are not described herein again.

To sum up, in the foregoing embodiments of this disclosure, a PSCCH resource mapping manner is defined, so as to be applicable to independent PSCCH transmission and a case in which a configuration of a related PSSCH exists in a same scheduling unit, thereby balancing a relationship between system overheads and resource utilization.

It should be noted that the terminal provided in some embodiments of this disclosure is a terminal capable of performing the foregoing method for determining a channel resource, and all embodiments of the foregoing method for determining a channel resource are applicable to the terminal, with the same or similar beneficial effects achieved.

As shown in FIG. 25, some embodiments of this disclosure further provide a terminal 300, including:
a detection module 301, configured to perform blind detection on a first-part PSCCH, and determine, based on a blind detection result, whether to perform detection on a second-part PSCCH; or configured to perform blind detection on a first-part PSCCH and a second-part PSCCH.

Optionally, in the foregoing embodiment of this disclosure, the detection module includes:
a first detection submodule, configured to perform blind detection on the first-part PSCCH; and
a second detection submodule, configured to: if demodulation of the first-part PSCCH succeeds and information about the second-part PSCCH is obtained, perform detection on the second-part PSCCH based on the information about the second-part PSCCH; or if demodulation of the first-part PSCCH fails, stop detection of the second-part PSCCH.

To sum up, some embodiments of this disclosure further define a detection method of 2-stage PSCCH transmission, thereby balancing a relationship between system overheads and resource utilization.

It should be noted that the terminal provided in some embodiments of this disclosure is a terminal capable of performing the foregoing channel detection method, and all embodiments of the foregoing channel detection method are applicable to the terminal, with the same or similar beneficial effects achieved.

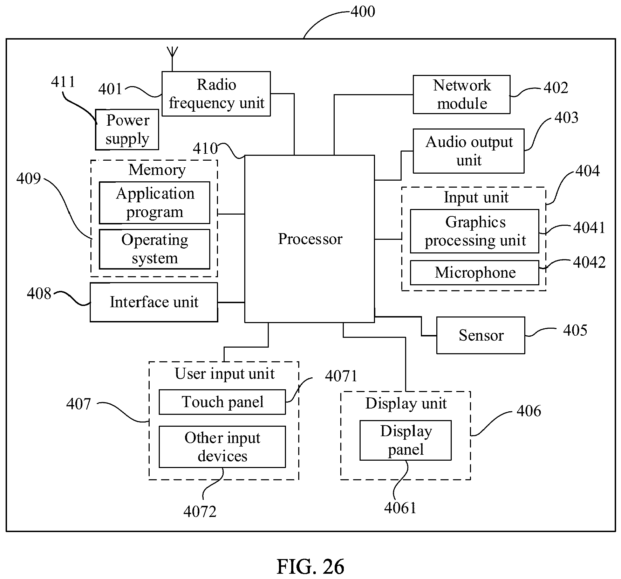

FIG. 26 is a schematic diagram of a hardware structure of a terminal for implementing the embodiments of this disclosure. The terminal 400 includes but is not limited to components such as a radio frequency unit 401, a network module 402, an audio output unit 403, an input unit 404, a sensor 405, a display unit 406, a user input unit 407, an interface unit 408, a memory 409, a processor 410, and a power supply 411. A person skilled in the art may understand that the structure of the terminal shown in FIG. 26 does not constitute a limitation on the terminal. The terminal may include more or fewer components than those shown in the figure, or some components may be combined, or the components may be arranged differently. In some embodiments of this disclosure, the terminal includes but is not limited to a mobile phone, a tablet computer, a notebook computer, a palmtop computer, a vehicle-mounted terminal, a wearable device, a pedometer, and the like.

The radio frequency unit 401 is configured to obtain a candidate resource of a physical sidelink control channel PSCCH, where the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set.

The processor 410 is configured to determine a transmission resource of the to-be-transmitted PSCCH based on the candidate resource. One subchannel has contiguous frequency domain resources.

To sum up, in the foregoing embodiments of this disclosure, a PSCCH resource mapping manner is defined, so as to be applicable to independent PSCCH transmission and a case in which a configuration of a related PSSCH exists in a same scheduling unit, thereby balancing a relationship between system overheads and resource utilization.

It should be noted that the terminal provided in some embodiments of this disclosure is a terminal capable of performing the foregoing method for determining a channel resource, and all embodiments of the foregoing method for determining a channel resource are applicable to the terminal, with the same or similar beneficial effects achieved.

Alternatively, the processor 410 is configured to perform blind detection on a first-part PSCCH, and determine, based on a blind detection result, whether to perform detection on a second-part PSCCH; or configured to perform blind detection on a first-part PSCCH and a second-part PSCCH.

To sum up, some embodiments of this disclosure further define a detection method of 2-stage PSCCH transmission, thereby balancing a relationship between system overheads and resource utilization.

It should be noted that the terminal provided in some embodiments of this disclosure is a terminal capable of performing the foregoing channel detection method, and all embodiments of the foregoing channel detection method are applicable to the terminal, with the same or similar beneficial effects achieved.

It should be understood that, in some embodiments of this disclosure, the radio frequency unit 401 may be configured to: receive and send signals during information receiving and sending or during a call; and specifically, receive downlink data from a base station, and send the downlink data to the processor 410 for processing; and send uplink data to the base station. Generally, the radio frequency unit 401 includes but is not limited to an antenna, at least one amplifier, a transceiver, a coupler, a low noise amplifier, a duplexer, and the like. In addition, the radio frequency unit 401 may further communicate with a network and another device through a wireless communications system.

The terminal provides wireless broadband Internet access for a user by using the network module 402, for example, helps the user send and receive emails, browse web pages, and access streaming media.

The audio output unit 403 may convert audio data received by the radio frequency unit 401 or the network module 402 or stored in the memory 409 into an audio signal, and output the audio signal as a sound. In addition, the audio output unit 403 may further provide audio output (for example, a call signal reception tone or a message reception tone) related to a specific function performed by the terminal 400. The audio output unit 403 includes a speaker, a buzzer, a telephone receiver, or the like.

The input unit 404 is configured to receive an audio signal or a video signal. The input unit 404 may include a graphics processing unit (Graphics Processing Unit, GPU) 4041 and a microphone 4042. The graphics processing unit 4041 processes image data of a still picture or a video obtained by an image capture apparatus (for example, a camera) in an image capture mode or a video capture mode. A processed image frame may be displayed on the display unit 406. An image frame processed by the graphics processing unit 4041 may be stored in the memory 409 (or another storage medium) or sent by the radio frequency unit 401 or the network module 402. The microphone 4042 can receive a sound and can process the sound into audio data. The audio data obtained through processing can be converted, in a telephone call mode, into a format that can be sent by the radio frequency unit 401 to a mobile communications base station for outputting.

The terminal 400 further includes at least one sensor 405, for example, an optical sensor, a motion sensor, and another sensor. Specifically, the optical sensor includes an ambient light sensor and a proximity sensor. The ambient light sensor may adjust brightness of a display panel 4061 based on intensity of ambient light. When the terminal 400 moves near an ear, the proximity sensor can turn off the display panel 4061 and/or backlight. As a type of motion sensor, an accelerometer sensor can detect magnitudes of accelerations in all directions (usually in three axes), can detect a magnitude and direction of gravity when being static, and can be used for terminal posture recognition (such as screen switching between a portrait mode and a landscape mode, related games, and magnetometer posture calibration), functions related to vibration recognition (such as a pedometer and tapping), and the like. The sensor 405 may further include a fingerprint sensor, a pressure sensor, an iris sensor, a molecular sensor, a gyroscope, a barometer, a hygrometer, a thermometer, an infrared sensor, and the like. Details are not described herein.

The display unit 406 is configured to display information that is input by the user or provided for the user. The display unit 406 may include the display panel 4061. The display panel 4061 may be configured in a form of a liquid crystal display (Liquid Crystal Display, LCD), an organic light-emitting diode (Organic Light-Emitting Diode, OLED), or the like.

The user input unit 407 may be configured to receive input digit or character information, and generate key signal input that is related to user setting and function control of the terminal. Specifically, the user input unit 407 includes a touch panel 4071 and other input devices 4072. The touch panel 4071, also referred to as a touchscreen, may capture a touch operation performed by the user on or near the touch panel (for example, an operation performed by the user on the touch panel 4071 or near the touch panel 4071 by using any appropriate object or accessory such as a finger or a stylus). The touch panel 4071 may include two parts: a touch detection apparatus and a touch controller. The touch detection apparatus detects a touch direction and location of the user, detects a signal brought by a touch operation, and transmits the signal to the touch controller. The touch controller receives touch information from the touch detection apparatus, converts the touch information into touch point coordinates, sends the coordinates to the processor 410, and receives and executes a command sent by the processor 410. In addition, the touch panel 4071 may be implemented in a plurality of forms, such as resistive, capacitive, infrared, and surface acoustic wave. The user input unit 407 may further include the other input devices 4072 in addition to the touch panel 4071. Specifically, the other input devices 4072 may include but are not limited to a physical keyboard, a function key (such as a volume control key or a power on/off key), a trackball, a mouse, a joystick, and the like. Details are not described herein.

Further, the touch panel 4071 may cover the display panel 4061. After detecting a touch operation on or near the touch panel 4071, the touch panel 4071 transmits the touch operation to the processor 410 to determine a type of a touch event. Then the processor 410 provides corresponding visual output on the display panel 4061 based on the type of the touch event. Although the touch panel 4071 and the display panel 4061 are used as two separate components in FIG. 26 to implement input and output functions of the terminal, in some embodiments, the touch panel 4071 and the display panel 4061 may be integrated to implement the input and output functions of the terminal. This is not specifically limited herein.

The interface unit 408 is an interface for connecting an external apparatus to the terminal 400. For example, the external apparatus may include a wired or wireless headphone port, an external power supply (or battery charger) port, a wired or wireless data port, a memory card port, a port for connecting an apparatus provided with an identification module, an audio input/output (I/O) port, a video I/O port, or an earphone port. The interface unit 408 may be configured to receive input (for example, data information and electric power) from the external apparatus, and transmit the received input to one or more elements in the terminal 400; or may be configured to transmit data between the terminal 400 and the external apparatus.

The memory 409 may be configured to store a software program and various types of data. The memory 409 may mainly include a program storage area and a data storage area. The program storage area may store an operating system, an application program required for at least one function (such as a sound play function and an image play function), and the like. The data storage area may store data (such as audio data and a phone book) created based on use of the mobile phone, and the like. In addition, the memory 409 may include a high-speed random access memory, and may further include a non-volatile memory, for example, at least one magnetic disk storage device, a flash memory device, or another non-volatile solid-state storage device.

The processor 410 is a control center of the terminal, and is connected to all components of the terminal by using various interfaces and lines. By running or executing a software program and/or a module stored in the memory 409 and invoking data stored in the memory 409, the processor 410 performs various functions of the terminal and processes data, so as to perform overall monitoring on the terminal. The processor 410 may include one or more processing units. Optionally, the processor 410 may integrate an application processor and a modem processor. The application processor mainly processes an operating system, a user interface, an application program, and the like. The modem processor mainly processes wireless communication. It may be understood that, alternatively, the modem processor may not be integrated into the processor 410.

The terminal 400 may further include the power supply 411 (for example, a battery) that supplies power to the components. Optionally, the power supply 411 may be logically connected to the processor 410 by using a power management system, so as to implement functions such as charging management, discharging management, and power consumption management by using the power management system.

In addition, the terminal 400 includes some functional modules that are not shown. Details are not described herein.

Optionally, some embodiments of this disclosure further provide a terminal, including a processor, a memory, and a program stored in the memory and capable of running on the processor. When the program is executed by the processor, processes of the foregoing embodiments of the method for determining a channel resource are implemented, with the same technical effects achieved. To avoid repetition, details are not described herein again.

Some embodiments of this disclosure further provide a computer-readable storage medium. The computer-readable storage medium stores a computer program. When the computer program is executed by a processor, processes of the foregoing embodiments of the method for determining a channel resource are implemented, with the same technical effects achieved. To avoid repetition, details are not described herein again. For example, the computer-readable storage medium is a read-only memory (Read-Only Memory, ROM for short), a random access memory (Random Access Memory, RAM for short), a magnetic disk, or an optical disc.

Optionally, some embodiments of this disclosure further provide a terminal, including a processor, a memory, and a program stored in the memory and capable of running on the processor. When the program is executed by the processor, processes of the foregoing embodiments of the channel detection method are implemented, with the same technical effects achieved. To avoid repetition, details are not described herein again.

Some embodiments of this disclosure further provide a computer-readable storage medium. The computer-readable storage medium stores a computer program. When the computer program is executed by a processor, processes of the foregoing embodiments of the channel detection method are implemented, with the same technical effects achieved. To avoid repetition, details are not described herein again. For example, the computer-readable storage medium is a read-only memory (Read-Only Memory, ROM for short), a random access memory (Random Access Memory, RAM for short), a magnetic disk, or an optical disc.

It may be understood that the embodiments described in this disclosure may be implemented by hardware, software, firmware, middleware, microcode, or a combination thereof. For implementation by hardware, modules, units, submodules, subunits, and the like may be implemented in one or more application-specific integrated circuits (Application Specific Integrated Circuits, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, other electronic units for implementing the functions described in this disclosure, or a combination thereof.

For implementation by software, the techniques described in the embodiments of this disclosure may be implemented by using modules (for example, procedures or functions) that perform the functions described in the embodiments of this disclosure. Software code may be stored in the memory and executed by the processor. The memory may be implemented in or outside the processor.

Therefore, the objective of this disclosure may also be achieved by running a program or a group of programs on any computing apparatus. The computing apparatus may be a general apparatus of common sense. Therefore, the objective of this disclosure may also be achieved by merely providing a program product including program code for implementing the method or apparatus. In other words, such a program product also constitutes this disclosure, and a storage medium storing such a program product also constitutes this disclosure. Apparently, the storage medium may be any storage medium of common sense or any storage medium that will be developed in the future. It should be further noted that, in the apparatus and method in this disclosure, apparently, the components or steps may be decomposed and/or recombined. The decomposition and/or recombination should be considered as an equivalent solution of this disclosure. In addition, steps for performing the foregoing series of processing may be naturally performed in time sequence following the order of description, but are not necessarily performed in time sequence. Some steps may be performed in parallel or independently of each other.

It should be noted that, in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to the process, method, article, or apparatus. In absence of more constraints, an element preceded by "includes a..." does not preclude existence of other identical elements in the process, method, article, or apparatus that includes the element.

According to the descriptions of the foregoing implementations, a person skilled in the art can clearly understand that the method in the foregoing embodiments may be implemented by using software on a necessary universal hardware platform, or certainly may be implemented by hardware. In most cases, the former is a more preferred implementation though. Based on such an understanding, the technical solutions of this disclosure essentially or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this disclosure.

The embodiments of this disclosure are described above with reference to the accompanying drawings, but this disclosure is not limited to these embodiments. These embodiments are merely illustrative rather than restrictive. Inspired by this disclosure, a person of ordinary skill in the art can still derive a plurality of variations without departing from the essence of this disclosure and the protection scope of the claims. All these variations shall fall within the protection scope of this disclosure.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. A method for determining a channel resource, applied to a terminal and comprising:
obtaining a candidate resource of a physical sidelink control channel PSCCH, wherein the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set; and
determining a transmission resource of the to-be-transmitted PSCCH based on the candidate resource, wherein
one subchannel has contiguous frequency domain resources.

2. The method according to claim 1, wherein the determining a transmission resource of the to-be-transmitted PSCCH based on the candidate resource comprises:
selecting the transmission resource of the to-be-transmitted PSCCH from the candidate resource.

3. The method according to claim 1, wherein in a case that the PSCCH comprises a first-part PSCCH and a second-part PSCCH, the determining a transmission resource of the to-be-transmitted PSCCH based on the candidate resource comprises:
selecting a transmission resource of the to-be-transmitted first-part PSCCH and a transmission resource of the to-be-transmitted second-part PSCCH from the candidate resource of the PSCCH.

4. The method according to claim 3, wherein the selecting a transmission resource of the to-be-transmitted first-part PSCCH and a transmission resource of the to-be-transmitted second-part PSCCH from the candidate resource comprises:
selecting the transmission resource of the to-be-transmitted first-part PSCCH from the candidate resource; and
after the transmission resource of the to-be-transmitted first-part PSCCH, mapping the second-part PSCCH, to obtain the transmission resource of the second-part PSCCH.

5. The method according to claim 1, wherein in a case that the PSCCH comprises a first-part PSCCH and a second-part PSCCH, the determining a transmission resource of the to-be-transmitted PSCCH based on the candidate resource comprises:
selecting a transmission resource of the to-be-transmitted first-part PSCCH from the candidate resource of the PSCCH; and
the method further comprises:
selecting a transmission resource of the to-be-transmitted second-part PSCCH on the PSSCH resource selected by the terminal.

6. The method according to claim 5, wherein the selecting a transmission resource of the to-be-transmitted second-part PSCCH on the PSSCH resource selected by the terminal comprises:
mapping the second-part PSCCH from a first physical resource block PRB of a PSSCH, to obtain the transmission resource of the second-part PSCCH;
or
mapping the second-part PSCCH from a first PRB of a first subchannel of a PSSCH, to obtain the transmission resource of the second-part PSCCH;
or
mapping the second-part PSCCH from a PRB with a first offset value relative to a first PRB of a first subchannel of a PSSCH, to obtain the transmission resource of the second-part PSCCH;
or
mapping the second-part PSCCH from a first PRB of a subchannel with a second offset value relative to a first subchannel of a PSSCH, to obtain the transmission resource of the second-part PSCCH, wherein
the first PRB is a highest PRB or lowest PRB, and the first subchannel is a lowest subchannel or highest subchannel of the PSSCH.

7. The method according to claim 1, wherein in a case that the PSCCH comprises a first-part PSCCH and a second-part PSCCH, and the candidate resource of the PSCCH comprises a candidate resource of the first-part PSCCH and a candidate resource of the second-part PSCCH,
the determining a transmission resource of the to-be-transmitted PSCCH based on the candidate resource comprises:
selecting a transmission resource of the to-be-transmitted first-part PSCCH from the candidate resource of the first-part PSCCH; and
selecting a transmission resource of the to-be-transmitted second-part PSCCH from the candidate resource of the second-part PSCCH.

8. The method according to any one of claims 2 to 6, wherein the selecting the transmission resource from the candidate resource comprises:
selecting the transmission resource from the candidate resource based on channel parameters of the to-be-transmitted channel, wherein
the channel parameters of the to-be-transmitted channel comprise:
time domain resource information of the to-be-transmitted channel and frequency domain resource information of the to-be-transmitted channel; and
the candidate resource is the candidate resource of the PSCCH, the transmission resource is the transmission resource of the PSCCH, and the to-be-transmitted channel is the PSCCH;
or
the candidate resource is the candidate resource of the PSCCH, the transmission resource is the transmission resource of the first-part PSCCH, and the to-be-transmitted channel is the first-part PSCCH;
or
the candidate resource is the candidate resource of the first-part PSCCH, the transmission resource is the transmission resource of the first-part PSCCH, and the to-be-transmitted channel is the first-part PSCCH;
or
the candidate resource is the candidate resource of the second-part PSCCH, the transmission resource is the transmission resource of the second-part PSCCH, and the to-be-transmitted channel is the second-part PSCCH.

9. The method according to claim 8, wherein the time domain resource information of the to-be-transmitted channel comprises at least one of the following:
a quantity of time domain symbols;
a time domain symbol start location;
a time domain symbol end location; and
a time domain resource pattern.

10. The method according to claim 8, wherein the frequency domain resource information of the to-be-transmitted channel comprises at least one of the following:
a quantity of frequency domain resources;
a frequency domain resource start location;
a frequency domain resource end location;
an offset value of the frequency domain resource start location relative to a first resource unit;
an offset value of the frequency domain resource end location relative to the first resource unit; and
a frequency domain resource pattern, wherein
the first resource unit is a lowest resource unit or highest resource unit of a resource pool selected by the terminal, or the first resource unit is a lowest resource unit or highest resource unit of the PSSCH resource selected by the terminal.

11. The method according to claim 8, wherein the channel parameters of the to-be-transmitted channel further comprise:
time division multiplexing and/or frequency division multiplexing.

12. The method according to any one of claims 3 to 7, further comprising:
adding resource information of the second-part PSCCH to the first-part PSCCH, wherein the resource information of the second-part PSCCH comprises at least one of the following:
a time domain resource start location of the second-part PSCCH;
a time domain resource end location of the second-part PSCCH;
a quantity of symbols occupied by a time domain resource of the second-part PSCCH;
a frequency domain resource start location of the second-part PSCCH;
a frequency domain resource end location of the second-part PSCCH;
a quantity of PRBs occupied by a frequency domain resource of the second-part PSCCH;
a quantity of subchannels occupied by the frequency domain resource of the second-part PSCCH;
a time domain offset value of the second-part PSCCH; and
a frequency domain offset value of the second-part PSCCH.

13. The method according to any one of claims 3 to 7, further comprising:
configuring a reference signal of the first-part PSCCH; and
configuring a reference signal of the second-part PSCCH.

14. The method according to claim 13, wherein the configuring a reference signal of the first-part PSCCH comprises:
obtaining configuration information that is predefined by a protocol, preconfigured by a network, configured by a network, or configured by the terminal for the reference signal of the first-part PSCCH; and
configuring the reference signal of the first-part PSCCH based on the configuration information of the reference signal of the first-part PSCCH.

15. The method according to claim 13, wherein the configuring a reference signal of the second-part PSCCH comprises:
configuring the reference signal of the second-part PSCCH by using configuration information that is the same as the configuration information used for the reference signal of the first-part PSCCH;
or
configuring the reference signal of the second-part PSCCH separately;
or
configuring the reference signal of the second-part PSCCH by using configuration information of a reference signal of the PSSCH.

16. The method according to claim 1, wherein the obtaining a candidate resource of a physical sidelink control channel PSCCH comprises:
obtaining first configuration information that is predefined by a protocol, preconfigured by a network, configured by a network, or configured by the terminal, wherein the first configuration information comprises at least one of the following:
a size of the resource set;
a start location of the resource set; and
an end location of the resource set.

17. The method according to claim 16, wherein the first configuration information further comprises at least one of the following:
an aggregation level of the PSCCH;
a size of the candidate resource of the PSCCH;
a quantity of candidate resources of the PSCCH;
a location of the candidate resource of the PSCCH;
a size of a candidate resource of a first-part PSCCH;
a quantity of candidate resources of the first-part PSCCH;
a location of the candidate resource of the first-part PSCCH;
a size of a candidate resource of a second-part PSCCH;
a quantity of candidate resources of the second-part PSCCH; and
a location of the candidate resource of the second-part PSCCH.

18. The method according to claim 1, wherein the obtaining a candidate resource of a physical sidelink control channel PSCCH comprises:
obtaining the candidate resource that is of the PSCCH on at least one subchannel of a PSSCH and that is predefined by a protocol, preconfigured by a network, configured by a network, or configured by the terminal;
or
obtaining an offset value of the candidate resource of the PSCCH relative to a subchannel of a PSSCH, wherein the candidate resource is predefined by a protocol, preconfigured by a network, configured by a network, or configured by the terminal;
or
obtaining the candidate resource that is of the PSCCH on at least one subchannel of the PSCCH and that is predefined by a protocol, preconfigured by a network, configured by a network, or configured by the terminal.

19. The method according to claim 1, wherein the obtaining a candidate resource of a physical sidelink control channel PSCCH comprises:
obtaining second configuration information that is predefined by a protocol, preconfigured by a network, configured by a network, or configured by the terminal, wherein the second configuration information comprises at least one of the following:
a size of the candidate resource of the PSCCH in the PSSCH subchannel;
a start location of the candidate resource of the PSCCH in the PSSCH subchannel;
an end location of the candidate resource of the PSCCH in the PSSCH subchannel;
a quantity of candidate resources of the PSCCH in the PSSCH subchannel;
a pattern of the candidate resource of the PSCCH in the PSSCH subchannel;
a size of the candidate resource of the PSCCH in the PSSCH resource;
a start location of the candidate resource of the PSCCH in the PSSCH resource;
an end location of the candidate resource of the PSCCH in the PSSCH resource;
a quantity of candidate resources of the PSCCH in the PSSCH resource; and
a pattern of the candidate resource of the PSCCH in the PSSCH resource.

20. The method according to claim 1, wherein the obtaining a candidate resource of a physical sidelink control channel PSCCH comprises:
obtaining first configuration signaling of a bandwidth part BWP, wherein the configuration signaling is applicable to a resource pool comprised in the BWP;
or
obtaining second configuration signaling of a resource pool, wherein the configuration signaling is applicable to the resource pool;
or
obtaining third configuration signaling of the subchannel of the PSCCH, wherein the third configuration signaling is applicable to the subchannel of the PSCCH;
or
obtaining fourth configuration signaling corresponding to a target aggregation level, wherein the fourth configuration signaling is applicable to the PSCCH corresponding to the target aggregation level, wherein
the first configuration signaling, the second configuration signaling, the third configuration signaling, or the fourth configuration signaling is used to configure the candidate resource of the PSCCH.

21. A channel detection method, applied to a terminal and comprising:
performing, by the terminal, blind detection on a first-part PSCCH, and determining, based on a blind detection result, whether to perform detection on a second-part PSCCH;
or
performing, by the terminal, blind detection on a first-part PSCCH and a second-part PSCCH.

22. The method according to claim 21, wherein the performing, by the terminal, blind detection on a first-part PSCCH, and determining, based on a blind detection result, whether to perform detection on a second-part PSCCH comprises:
performing, by the terminal, blind detection on the first-part PSCCH; and
if demodulation of the first-part PSCCH succeeds and information about the second-part PSCCH is obtained, performing detection on the second-part PSCCH based on the information about the second-part PSCCH; or
if demodulation of the first-part PSCCH fails, stopping detection of the second-part PSCCH.

23. A terminal, comprising:
an obtaining module, configured to obtain a candidate resource of a physical sidelink control channel PSCCH, wherein the candidate resource is in a subchannel of the PSCCH, or the candidate resource is in a subchannel of a physical sidelink shared channel PSSCH resource selected by the terminal, or the candidate resource is in a frequency domain range of a PSSCH resource selected by the terminal, or the candidate resource is in a resource set; and
a resource determining module, configured to determine a transmission resource of the to-be-transmitted PSCCH based on the candidate resource, wherein
one subchannel has contiguous frequency domain resources.

24. The terminal according to claim 23, wherein the resource determining module comprises:
a first resource selection submodule, configured to select the transmission resource of the to-be-transmitted PSCCH from the candidate resource.

25. The terminal according to claim 23, wherein the resource determining module comprises:
a second resource selection submodule, configured to: in a case that the PSCCH comprises a first-part PSCCH and a second-part PSCCH, select a transmission resource of the to-be-transmitted first-part PSCCH and a transmission resource of the to-be-transmitted second-part PSCCH from the candidate resource of the PSCCH.

26. The terminal according to claim 25, wherein the second resource selection submodule comprises:
a first unit, configured to select the transmission resource of the to-be-transmitted first-part PSCCH from the candidate resource; and
a second unit, configured to, after the transmission resource of the to-be-transmitted first-part PSCCH, sequentially map the second-part PSCCH, to obtain the transmission resource of the second-part PSCCH.

27. The terminal according to claim 23, wherein in a case that the PSCCH comprises a first-part PSCCH and a second-part PSCCH, the resource determining module comprises:
a first selection module, configured to select a transmission resource of the to-be-transmitted first-part PSCCH from the candidate resource of the PSCCH; and
the terminal further comprises:
a second selection module, configured to select a transmission resource of the to-be-transmitted second-part PSCCH on the PSSCH resource selected by the terminal for data transmission.

28. The terminal according to claim 27, wherein the second selection module comprises:
a selection submodule, configured to map the second-part PSCCH from a first physical resource block PRB of a PSSCH, to obtain the transmission resource of the second-part PSCCH; or
configured to map the second-part PSCCH from a first PRB of a first subchannel of a PSSCH, to obtain the transmission resource of the second-part PSCCH; or
configured to map the second-part PSCCH from a PRB with a first offset value relative to a first PRB of a first subchannel of a PSSCH, to obtain the transmission resource of the second-part PSCCH; or
configured to map the second-part PSCCH from a first PRB of a subchannel with a second offset value relative to a first subchannel of a PSSCH, to obtain the transmission resource of the second-part PSCCH, wherein
the first PRB is a highest PRB or lowest PRB, and the first subchannel is a lowest subchannel or highest subchannel of the PSSCH.

29. The terminal according to claim 23, wherein in a case that the PSCCH comprises a first-part PSCCH and a second-part PSCCH, and the candidate resource of the PSCCH comprises a candidate resource of the first-part PSCCH and a candidate resource of the second-part PSCCH, the resource determining module comprises:
a third selection module, configured to select a transmission resource of the to-be-transmitted first-part PSCCH from the candidate resource of the first-part PSCCH; and
a fourth selection module, configured to select a transmission resource of the to-be-transmitted second-part PSCCH from the candidate resource of the second-part PSCCH.

30. A terminal, comprising:
a detection module, configured to perform blind detection on a first-part PSCCH, and determine, based on a blind detection result, whether to perform detection on a second-part PSCCH; or configured to perform blind detection on a first-part PSCCH and a second-part PSCCH.

31. A terminal, comprising a processor, a memory, and a program stored in the memory and capable of running on the processor, wherein when the program is executed by the processor, steps of the method for determining a channel resource according to any one of claims 1 to 20 are implemented, or when the program is executed by the processor, steps of the channel detection method according to claim 21 or 22 are implemented.

32. A computer-readable storage medium, wherein the computer-readable storage medium stores a computer program, and when the computer program is executed by a processor, steps of the method for determining a channel resource according to any one of claims 1 to 20 are implemented, or when the computer program is executed by a processor, steps of the channel detection method according to claim 21 or 22 are implemented.
